(19) Europäisches Patentamt
European Patent Office
Office européen des brevets

(11) EP 4 321 563 A1

(12) **EUROPEAN PATENT APPLICATION**
published in accordance with Art. 153(4) EPC

(43) Date of publication:
**14.02.2024 Bulletin 2024/07**

(21) Application number: **23767204.3**

(22) Date of filing: **10.03.2023**

(51) International Patent Classification (IPC):
***C08J 5/18*** *(2006.01)* ***C08G 73/10*** *(2006.01)*

(52) Cooperative Patent Classification (CPC):
**C08G 73/10; C08J 5/18**

(86) International application number:
**PCT/KR2023/003301**

(87) International publication number:
**WO 2023/172103 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2022 KR 20220030175**
**09.03.2023 KR 20230031292**

(71) Applicant: **LG Chem, Ltd.**
**Seoul 07336 (KR)**

(72) Inventors:
- **KANG, Mi Eun**
**Daejeon 34122 (KR)**
- **PARK, Chan Hyo**
**Daejeon 34122 (KR)**
- **PARK, Jinyoung**
**Daejeon 34122 (KR)**
- **PARK, Chae Won**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **POLYIMIDE-BASED RESIN FILM, DISPLAY DEVICE SUBSTRATE USING SAME, AND OPTICAL DEVICE**

(57) The present disclosure relates to a polyimide-based polymer film comprising a polyimide-based polymer which contains a polyimide repeating unit represented by Chemical Formula 1 and a polyimide repeating unit represented by Chemical Formula 2, and a substrate for display device and an optical device using the same.

【FIG. 1】

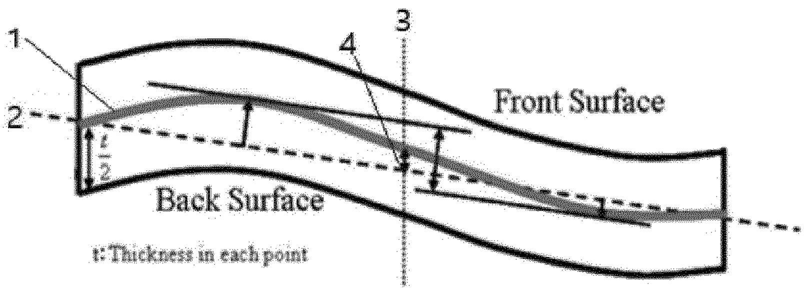


EP 4 321 563 A1

## Description

### [TECHNICAL FIELD]

CROSS-REFERENCE TO RELATED APPLICATION(S)

This application claims the benefit of Korean Patent Application No. 10-2022-0030175 filed on March 10, 2022 and Korean Patent Application No. 10-2023-0031292 filed on March 9, 2023 in the Korean Intellectual Property Office, the disclosures of which are incorporated herein by reference in their entirety.

The present disclosure relates to a polyimide-based polymer film that can realize excellent warpage properties and low retardation, and a substrate for display device and an optical device using the same.

### [BACKGROUND ART]

The display device market is rapidly changing based on flat panel displays (FPDs) that are easy to fabricate over a large area and can be reduced in thickness and weight. Such flat panel displays include liquid crystal displays (LCDs), organic light emitting diode displays (OLEDs), or electrophoretic devices (EPDs).

In line with recent efforts to further extend the application and use of flat panel displays, particular attention has focused on so-called flexible display devices in which flexible substrates are applied to flat panel displays. The application of such flexible display devices is particularly reviewed based on mobile devices such as smart phones and the application fields thereof are gradually extended.

In general, in manufacturing a flexible display device and an illumination device, a TFT device is manufactured by forming a multilayer inorganic film such as a buffer layer, an active layer, and a gate insulator on the cured polyimide.

However, the polyimide polymer conventionally used has a large refractive index in the plane direction and exhibits a large difference from the refractive index in the thickness direction. Due to this, as the polyimide has anisotropic properties, there is a limit in that a light distortion phenomenon occurs and thus the visibility is greatly deteriorated.

In addition, when the polyimide material contained in the polyimide layer (substrate layer) is cured at a high temperature of 400°C or more, there was a limit that the deterioration of the polyimide causes a decrease in optical properties, or it is difficult to secure flatness due to the warpage properties of being physically twisted.

Therefore, there is a demand for the development of a new polyimide that can satisfy excellent warpage properties while reducing the difference in refractive index in the plane direction and the thickness direction and thus improving the visibility.

### [DETAILED DESCRIPTION OF THE INVENTION]

### [Technical Problem]

It is an object of the present disclosure to provide a polyimide-based polymer film that can achieve excellent warpage properties and low retardation.

It is another object of the present disclosure to provide a substrate for display device and an optical device using the polyimide-based polymer film.

### [Technical Solution]

In order to achieve the above objects, provided herein is a polyimide-based polymer film comprising a polyimide-based polymer which contains a polyimide repeating unit represented by the following Chemical Formula 1 and a polyimide repeating unit represented by the following Chemical Formula 2, wherein a residual stress with an inorganic material substrate based on a thickness of 10 $\mu$m is 55 MPa or less, and wherein a thickness direction retardation $R_{th}$ value based on a thickness of 10 $\mu$m is 100 nm or less.

[Chemical Formula 1]

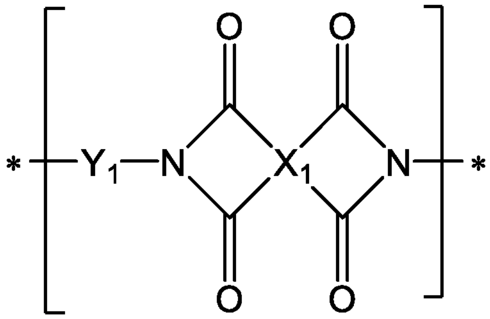

wherein, in Chemical Formula 1,

$X_1$ is an aromatic tetravalent functional group, and
$Y_1$ is an aromatic divalent functional group having 6 to 10 carbon atoms,

[Chemical Formula 2]

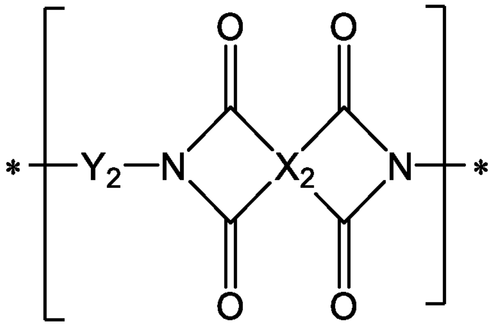

wherein, in Chemical Formula 2,
$X_2$ is an aromatic tetravalent functional group, and
$Y_2$ is an aromatic divalent functional group containing a polycyclic ring.

Also provided herein is a polyimide-based polymer film comprising a polyimide-based polymer which contains a polyimide repeating unit represented by the following Chemical Formula 1 and a polyimide repeating unit represented by the following Chemical Formula 2, wherein a Bow value based on a thickness of 5 $\mu$m is 25 $\mu$m or less, and wherein a thickness direction retardation $R_{th}$ value based on a thickness of 5 $\mu$m is 100 nm or less.

[Chemical Formula 1]

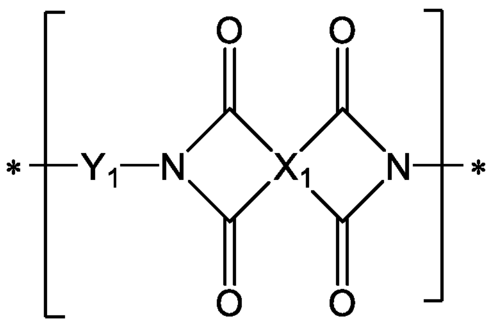

wherein, in Chemical Formula 1, $X_1$ is an aromatic tetravalent functional group, and $Y_1$ is an aromatic divalent functional group having 6 to 10 carbon atoms,

[Chemical Formula 2]

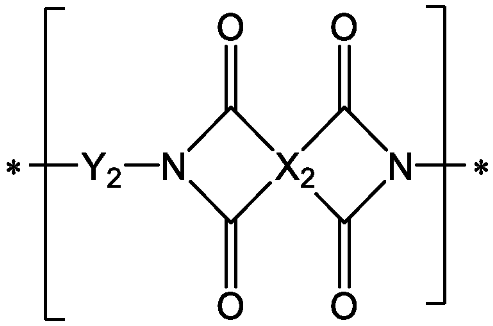

wherein, in Chemical Formula 2, $X_2$ is an aromatic tetravalent functional group, and $Y_2$ is an aromatic divalent functional group containing a polycyclic ring.

Further provided herein is a substrate for display device comprising the polyimide-based polymer film.

Further provided herein is an optical device comprising the polyimide-based polymer film.

Hereinafter, a polyimide-based polymer film according to specific embodiments of the present disclosure, a substrate for display device and an optical device using the same will be described in more detail.

Unless otherwise specified throughout this specification, the technical terms used herein are only for reference to specific embodiments and is not intended to limit the present disclosure.

The singular forms "a", "an", and "the" used herein include plural references unless the context clearly dictates otherwise.

The term "including" or "comprising" used herein specifies a specific feature, region, integer, step, action, element and/or component, but does not exclude the presence or addition of a different specific feature, region, integer, step, action, element, component and/or group.

The terms including ordinal numbers such as "a first", "a second", etc. are used only for the purpose of distinguishing one component from another component, and are not limited by the ordinal numbers. For instance, a first component may be referred to as a second component, or similarly, the second component may be referred to as the first component, without departing from the scope of the present invention.

In the present specification, the (co)polymer means including both a polymer and a copolymer, the polymer means a homopolymer consisting of a single repeating unit, and the copolymer means a composite polymer containing two or more repeating units.

In the present specification, examples of the substituents are described below, but are not limited thereto.

In the present specification, the term "substituted" means that other functional groups instead of a hydrogen atom in the compound are bonded, and a position to be substituted is not limited as long as the position is a position at which the hydrogen atom is substituted, that is, a position at which the substituent can be substituted, and when two or more substituents are substituted, the two or more substituents may be the same as or different from each other.

In the present specification, the term "substituted or unsubstituted" means being unsubstituted or substituted with one or more substituents selected from the group consisting of deuterium; a halogen group; a cyano group; a nitro group; a hydroxyl group; a carbonyl group; an ester group; an imide group; an amide group; a primary amino group; a carboxy group; a sulfonic acid group; a sulfonamide group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkoxysilylalkyl group; an arylphosphine group; or a heterocyclic group containing at least one of N, O, and S atoms, or being unsubstituted or substituted with a substituent to which two or more substituents are linked among the substituents exemplified above. For example, "the substituent to which two or more substituents are linked" may be a biphenyl group. That is, the biphenyl group may also be an aryl group, and may be interpreted as a substituent to which two phenyl groups are linked.

In the present specification, the notation 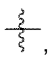, or  means a bond linked to another substituent group, and a direct bond means the case where no other atoms exist in the parts represented as L.

In the present specification, aromatic is a property that satisfies Huckel's Rule, and a compound can be defined as aromatic if all of the following three conditions are satisfied according to Huckle's Rule.

1) There must be 4n+2 electrons that are completely conjugated by empty p-orbitals, unsaturated bonds, lone

electron pairs, etc.

2) 4n+2 electrons have to form planar isomers and form a ring structure.

3) All atoms of the ring have to be able to participate in conjugation.

In the present specification, a multivalent functional group is a residue in which a plurality of hydrogen atoms bonded to an arbitrary compound are removed, and for example, it may be a divalent functional group, a trivalent functional group, and a tetravalent functional group. As an example, a tetravalent functional group derived from a cyclobutane means a residue in which any four hydrogen atoms bonded to the cyclobutane are removed.

In the present specification, the aryl group is a monovalent functional group derived from an arene, and is not particularly limited, but the carbon atomic number thereof is preferably 6 to 20, and it may be a monocyclic aryl group or a polycyclic aryl group. The monocyclic aryl group may be a phenyl group, a biphenyl group, a terphenyl group or the like, but is not limited thereto. The polycyclic aryl group includes a naphthyl group, an anthracenyl group, a phenanthrenyl group, a pyrenyl group, a perylenyl group, a chrysenyl group, fluorenyl group, or the like, but is not limited thereto. The aryl group may be substituted or unsubstituted, and when it is substituted, examples of the substituent are the same as described above.

In the present specification, a direct bond or a single bond means being connected to a bond line in which no atoms or atomic groups exist at the corresponding position. Specifically, it means the case where no other atoms exist in the parts represented as $L_1$, or $L_2$ in Chemical Formula.

In the present specification, the weight average molecular weight means a weight average molecular weight in terms of polystyrene measured by GPC method. In the process of determining the weight average molecular weight in terms of polystyrene measured by the GPC method, a commonly known analyzing device, a detector such as a refractive index detector, and an analytical column can be used. Commonly applied conditions for temperature, solvent, and flow rate can be used. Specifically, the measurement was performed, for example, using Waters PL-GPC220 and a Polymer Laboratories PLgel MIX-B 300 mm length column. An evaluation temperature was 160°C, 1,2,4-trichlorobenzene was used as a solvent, and the flow rate is 1 mL/min. The sample at a concentration of 10 mg/10 mL was supplied in an amount of 200 μL, and the values of Mw were obtained using a calibration curve formed using a polystyrene standard. 9 kinds of the polystyrene standards were used with the molecular weight of 2,000 / 10,000 / 30,000 / 70,000 / 200,000 / 700,000 / 2,000,000 / 4,000,000 / 10,000,000.

Now, the present disclosure will be described in more detail.

### 1. Polyimide-based polymer film

According to one embodiment of the present disclosure, there can be provided a polyimide-based polymer film comprising a polyimide-based polymer which contains a polyimide repeating unit represented by the following Chemical Formula 1 and a polyimide repeating unit represented by the following Chemical Formula 2, wherein a residual stress with an inorganic material substrate based on a thickness of 10 μm is 55 MPa or less, and wherein a thickness direction retardation $R_{th}$ value at a thickness of 10 μm is 100 nm or less.

[Chemical Formula 1]

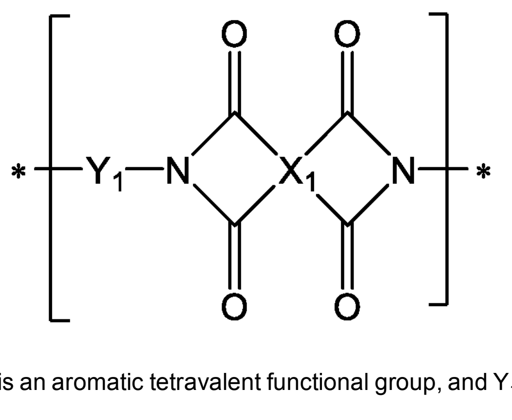

wherein, in Chemical Formula 1, $X_1$ is an aromatic tetravalent functional group, and $Y_1$ is an aromatic divalent functional group having 6 to 10 carbon atoms,

[Chemical Formula 2]

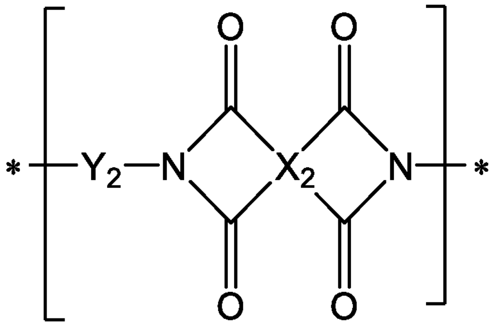

wherein, in Chemical Formula 2, $X_2$ is an aromatic tetravalent functional group, and $Y_2$ is an aromatic divalent functional group containing a polycyclic ring.

The present inventors have found through experiments that when the polyimide repeating unit represented by Chemical Formula 1 and the polyimide repeating unit represented by Chemical Formula 2 are included at the same time as in the polyimide-based polymer film of the one embodiment, not only the polyimide resin film that has been cured at a high temperature of 400°C or more minimizes occurrence of warpage, has high flatness and dimensional stability, and can solve the defect caused by detachment phenomenon during the panel process, but also it is enhanced in optical isotropy and realizes a low retardation, thereby securing a diagonal viewing angle of the display to which the polyimide resin film is applied, preventing deterioration of visibility due to light distortion phenomenon, and completing the present disclosure.

In particular, since the polyimide-based polymer includes a reaction product obtained by an imidization reaction of an aromatic tetracarboxylic dianhydride and an aromatic diamine containing a polycyclic ring, similarly to the structure represented by Chemical Formula 2, it appears that the polyimide-based polymer secures high heat resistance through physical and chemical actions according to the structure of aromatic diamine containing a polycyclic ring, and achieves excellent flatness not only in the cured film obtained by heat treatment at a high temperature of 400°C or more, but also when the cured film is further heat-treated at a high temperature of 400°C or more. In addition, a symmetrical structure with increased steric hindrance due to a polycyclic ring is introduced into the polyimide chain structure, thereby reducing the difference in refractive index between the plane direction and the thickness direction and thus realizing a low retardation.

Further, since the polyimide-based polymer includes a reaction product obtained through an imidization reaction of an aromatic tetracarboxylic dianhydride and an aromatic diamine having 6 to 10 carbon atoms, similarly to the structure represented by Chemical Formula 1, the polyimide-based polymer reduces the refractive index difference between the plane direction and the thickness direction by the aromatic diamine having 6 to 10 carbon atoms having a curved asymmetric structure, thereby achieving a low retardation.

More specifically, in the case of polyimide having a planar linear main chain structure, since the polyimides are packed side by side and stacked, the refractive index in the thickness direction is low, whereas as the asymmetric structure is introduced in a curved shape into the polyimide chain structure, the arrangement can be maintained in the thickness direction, thereby reducing the difference in refractive index between the plane direction and the thickness direction and thus realizing a low retardation.

The polyimide-based polymer film according to the present disclosure can increase the refractive index and is used as a substrate layer in a flexible display device, and can reduce the difference in refractive index from each layer constituting the device, thereby reducing the amount of light that is extinguished inside, and effectively increasing the bottom emission efficiency.

Specifically, the polyimide-based polymer film may include a polyimide-based polymer. The polyimide-based polymer means including both a polyimide, and a precursor polymer thereof such as polyamic acid or polyamic acid ester. That is, the polyimide-based polymer may include one or more selected from the group consisting of a polyamic acid repeating unit, a polyamic acid ester repeating unit, and a polyimide repeating unit. That is, the polyimide-based polymer may include one type of polyamic acid repeating unit, one type of polyamic acid ester repeating unit, one type of polyimide repeating unit, or a copolymer in which these two or more types of repeating units are mixed.

The one or more types of repeating units selected from the group consisting of the polyamic acid repeating unit, the polyamic acid ester repeating unit, or the polyimide repeating units may form a main chain of the polyimide-based polymer.

The polyimide-based polymer film may include a cured product of the polyimide-based polymer. The cured product of the polyimide-based polymer means a product obtained through the curing process of the polyimide-based polymer.

In particular, the polyimide-based polymer may include a polyimide repeating unit represented by the following

Chemical Formula 1.

[Chemical Formula 1]

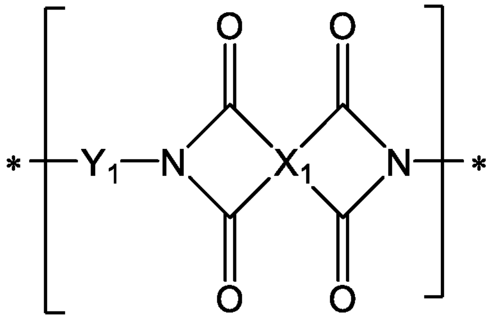

wherein, in Chemical Formula 1, $X_1$ is an aromatic tetravalent functional group, and $Y_1$ is an aromatic divalent functional group having 6 to 10 carbon atoms.

In Chemical Formula 1, $X_1$ is an aromatic tetravalent functional group, wherein the $X_1$ is a functional group derived from a tetracarboxylic dianhydride compound used in the synthesis of a polyimide-based polymer.

The $X_1$ may be one of the tetravalent functional groups represented by the following Chemical Formula 5.

[Chemical Formula 5]

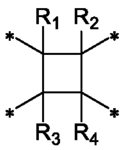 , 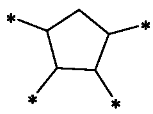 , 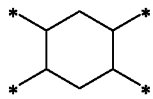 , 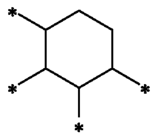 ,

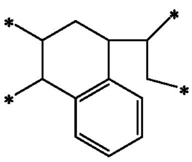 , 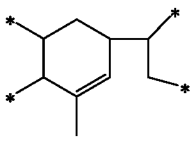 , 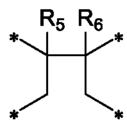 , 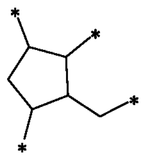 ,

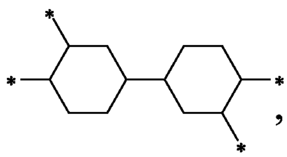 , 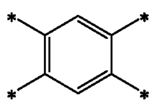 , 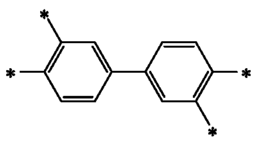 or 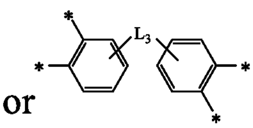

wherein, in Chemical Formula 5, $R_1$ to $R_6$ are each independently hydrogen or an alkyl group having 1 to 6 carbon atoms, $L_3$ is any one selected from the group consisting of a single bond, -O-, -CO-, -COO-, -S-, -SO-, $-SO_2-$, $-CR_7R_8-$, $-(CH_2)_t-$, - $O(CH_2)_tO-$, $-COO(CH_2)_tOCO-$, -CONH-, phenylene or a combination thereof, where $R_7$ and $R_8$ are each independently one of hydrogen, an alkyl group having 1 to 10 carbon atoms, or a halo alkyl group having 1 to 10 carbon atoms, and t is an integer of 1 to 10.

Specific examples of the functional group represented by Chemical Formula 5 may include a functional group represented by the following Chemical Formula 5-1 derived from 3,3',4,4'-Biphenyltetracarboxylic dianhydride (BPDA).

[Chemical Formula 5-1]

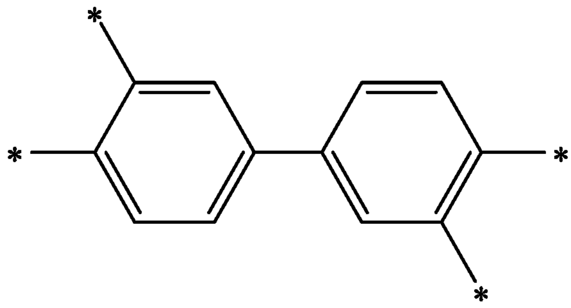

When a functional group represented by Chemical Formula 5-1 is included as the aromatic tetravalent functional group, it has a more linear structure than functional groups derived from anhydrides with different bulky structures (e.g., BPAF, 6FDA). Therefore, by lowering the coefficient of thermal expansion (CTE) and suppressing occurrence of warpage during curing at a high temperature of 400°C or more, it has a flatness suitable for stacking devices on the film, and enables subsequent processes.

Meanwhile, in Chemical Formula 1, $Y_1$ is an aromatic divalent functional group having 6 to 10 carbon atoms, wherein the $Y_1$ may be a functional group derived from a polyamic acid, a polyamic acid ester, or a diamine compound used in the synthesis of polyimide.

The aromatic divalent functional group having 6 to 10 carbon atoms may include a phenylene group. More specifically, the aromatic divalent functional group having 6 to 10 carbon atoms of $Y_1$ may include a functional group represented by the following Chemical Formula 3.

[Chemical Formula 3]

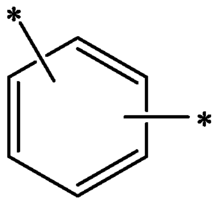

Specific examples of the functional group represented by the above Chemical Formula 3 may include a functional group represented by the following Chemical Formula 3-1 derived from m-phenylenediamine (1,3-phenylenediamine, m-PDA).

[Chemical Formula 3-1]

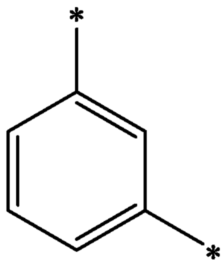

When the functional group represented by Chemical Formula 3-1 is included in the Yi, as the asymmetric structure is introduced into the polyimide chain structure in a curved form, the arrangement can be maintained in the thickness direction, thereby reducing the difference in refractive index between the plane direction and the thickness direction and thus realizing a low retardation.

On the other hand, when a functional group derived from p-phenylenediamine (1,4-phenylenediamine, p-PDA) having no curved asymmetric structure is included in the Yi, it is difficult to realize the above-mentioned curved asymmetric structure, and thus, the polymer grows only in the plane direction while the polyimide is polymerized in a linear direction

in the plane. Therefore, as the polymers are well packed the thickness direction refractive index decreases, which may cause a problem that the difference in refractive index in the plane direction and the thickness direction increases.

Meanwhile, the polyimide-based polymer may further include a polyimide repeating unit represented by the following Chemical Formula 2 in addition to the polyimide repeating unit represented by Chemical Formula 1. That is, the polyimide-based polymer may include a polyimide repeating unit represented by Chemical Formula 1 and a polyimide repeating unit represented by Chemical Formula 2.

[Chemical Formula 2]

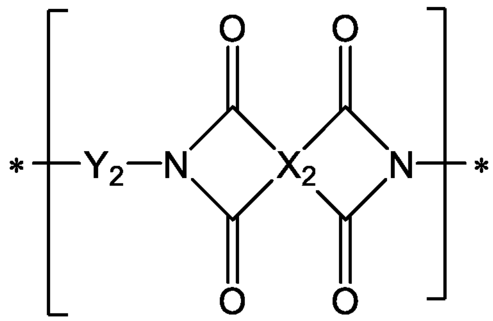

wherein, in Chemical Formula 2, $X_2$ is an aromatic tetravalent functional group, and $Y_2$ is an aromatic divalent functional group containing a polycyclic ring.

The $X_2$ is the same as $X_1$ of Chemical Formula 1.

In Chemical Formula 2, $Y_2$ is an aromatic divalent functional group containing a polycyclic ring, and the $Y_2$ is a functional group derived from a diamine compound used in the synthesis of a polyimide-based polymer.

More specifically, the aromatic divalent functional group of the $Y_2$ may include a divalent functional group represented by the following Chemical Formula 4.

[Chemical Formula 4]

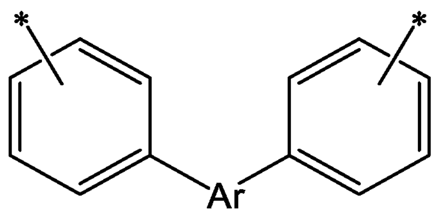

wherein, in Chemical Formula 4, Ar is a polycyclic aromatic divalent functional group. The polycyclic aromatic divalent functional group is a divalent functional group derived from a polycyclic aromatic hydrocarbon compound or a derivative thereof, wherein the derivative compound includes all compounds in which one or more substituents are introduced or carbon atoms are replaced with heteroatoms.

More specifically, in Ar of Chemical Formula 4, the polycyclic aromatic divalent functional group may include a fused cyclic divalent functional group containing at least two or more aromatic ring structures. That is, the polycyclic aromatic divalent functional group not only contains at least two or more aromatic ring structures in the functional group structure, but also can have a fused ring structure.

The aromatic ring structure may include an arene structure containing at least one benzene ring, or a hetero arene structure in which a carbon atom in the arene structure is replaced with a heteroatom.

At least two or more of the aromatic ring structure can be contained in the polycyclic aromatic divalent functional group, and each of the two or more aromatic ring structures may directly form a fused ring or may form a fused ring via another ring structure. For example, when two benzene rings are each fused to a cycloalkyl ring structure, it can be defined that two benzene rings form a fused ring via a cycloalkyl ring.

The fused cyclic divalent functional group containing at least two or more aromatic ring structures is a divalent functional group derived from a fused cyclic compound containing at least two or more aromatic ring structures or a derivative compound thereof, and the derivative compound includes all compounds in which one or more substituents are introduced or carbon atoms are replaced with heteroatoms.

In Ar of Chemical Formula 4, the polycyclic aromatic divalent functional group may include a fluorenylene group.

A specific example of the functional group represented by Chemical Formula 4 may include a functional group represented by the following Chemical Formula 4-1 derived from 9,9'-bis(4-aminophenyl)fluorene (FDA).

[Chemical Formula 4-1]

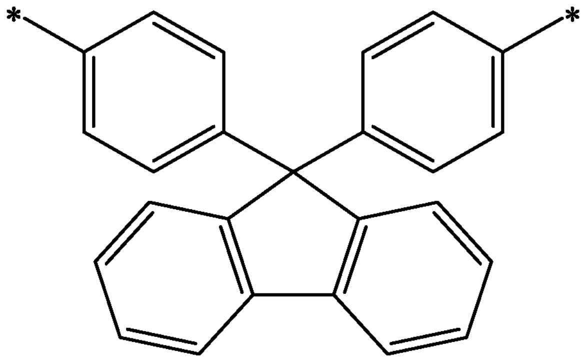

When the aromatic divalent functional group containing a polycyclic ring is included in the $Y_2$, an asymmetric structure with increased steric hindrance due to a polycyclic ring is introduced into the polyimide chain structure, and thus deformation due to heat can be alleviated and heat resistance can be improved. A bulky structure with increased steric hindrance in the thickness direction by a polycyclic ring is introduced into the polyimide chain structure, whereby the refractive index in the thickness direction is increased and the difference in refractive index between the plane direction and the thickness direction is reduced, thereby realizing a low retardation, and also packing between molecules is suppressed, thereby realizing high transmittance.

The polyimide-based polymer may include a combination of an aromatic tetracarboxylic dianhydride, an aromatic diamine having 6 to 10 carbon atoms, and an aromatic diamine containing a polycyclic ring.

The aromatic tetracarboxylic dianhydride is a compound in which an anhydride group (-OC-O-CO-) is introduced at both ends of the aromatic tetravalent functional group, and the details concerning the aromatic tetravalent functional group are the same as described above.

Specific examples of the aromatic tetracarboxylic dianhydride include 3,3',4,4'-biphenyltetracarboxylic dianhydride (BPDA).

The aromatic diamine having 6 to 10 carbon atoms is a compound in which amino groups ($-NH_2$) are introduced at both ends of the aromatic divalent functional group having 6 to 10 carbon atoms, and the details concerning the aromatic divalent functional group having 6 to 10 carbon atoms are the same described above. Specific examples of the aromatic diamine having 6 to 10 carbon atoms include m-phenylenediamine (1,3-phenylenediamine, m-PDA).

The aromatic diamine containing a polycyclic ring is a compound in which an amino group ($-NH_2$) is introduced at both ends of the polycyclic aromatic divalent functional group, and the details concerning the polycyclic aromatic divalent functional group is the same as described above. A specific example of the aromatic diamine containing a polycyclic ring may include 9,9'-bis(4-aminophenyl)fluorene (FDA).

More specifically, in the polyimide-based polymer, a bond between the nitrogen atom of the amino group and the carbon atom of the anhydride group may be formed by a reaction between the terminal anhydride group (-OC-O-CO-) of the aromatic tetracarboxylic acid dianhydride and the terminal amino group ($-NH_2$) of the aromatic diamine having 6 to 10 carbon atoms and the aromatic diamine containing a polycyclic ring.

Meanwhile, the polyimide-based polymer may further include a first repeating unit containing a repeating unit represented by Chemical Formula 1 in which the diamine-derived repeating unit is the functional group represented by Chemical Formula 3; and a second repeating unit containing a repeating unit represented by Chemical Formula 2 in which the diamine-derived repeating unit is the functional group represented by Chemical Formula 4. The first repeating unit and the second repeating unit are randomly arranged in the polyimide-based polymer to form a random copolymer, or a block copolymer can be formed by forming a block between the first repeating units and a block between the second repeating units.

The polyimide-based polymer containing the repeating unit represented by Chemical Formula 1 and the repeating unit represented by Chemical Formula 2 can be prepared by reacting two or more types of different diamine compounds together with tetracarboxylic dianhydride compound, and a random copolymer can be synthesized by simultaneously adding the two types of diamines, or a block copolymer can be synthesized by sequentially adding them.

The molar ratios between the polyimide repeating unit represented by Chemical Formula 1 and the polyimide repeating unit represented by Chemical Formula 2 may be 9:1 to 1:9, or 9:1 to 2:1, or 6:1 to 2:1, or 6:1 to 3.5:1, or 3.5:1 to 2:1, or 1:2 to 1:9, or 1:2 to 1:6, or 1:3 to 1:5.

Thereby, excellent warpage properties and colorless transparency can be realized through a low degree of yellowing, and at the same time, the optical isotropy is increased through the low retardation $R_{th}$ characteristic in the thickness direction, so that the viewing angle of the display to which the polyimide-based polymer film is applied is secured, thereby capable of preventing deterioration of visibility due to light distortion phenomenon.

On the other hand, if the polyimide repeating unit represented by Chemical Formula 1 is contained in an excessively small amount and thus, the molar ratio between the polyimide repeating unit represented by Chemical Formula 1 and the polyimide repeating unit represented by Chemical Formula 2 exceeds 1:9, a polyimide polymer film that has been cured at a high temperature of 400°C or more increases occurrence of warpage, which makes it difficult to stack devices on the film, and thus may make it impossible to carry out subsequent processes.

Further, when the polyimide repeating unit represented by Chemical Formula 2 is contained in an excessively small amount and thus, the molar ratio between the polyimide repeating unit represented by Chemical Formula 1 and the polyimide repeating unit represented by Chemical Formula 2 exceeds 9:1, there is a problem that the thickness direction retardation $R_{th}$ value increases and the visibility deteriorates due to the light distortion phenomenon accompanying the increase in the retardation, and further, the optical properties may become poor, such as an increase in film haze and a decrease in transparency properties.

Meanwhile, the polyimide-based polymer film of one embodiment may include a cured product obtained by curing the polyimide-based polymer at a temperature of 400°C or more. The cured product means a material obtained through a curing process of a resin composition containing the polyimide-based polymer, and the curing process can be performed at a temperature of 400°C or more, or 400°C or more and 500°C or less.

The polyimide repeating unit represented by Chemical Formula 1 and the polyimide repeating unit represented by Chemical Formula 2 may be contained in an amount of 70 mol% or more, or 80 mol% or more, or 90 mol% or more, or 91 mol% or more, or 92 mol% or more, or 93 mol% or more, or 94 mol% or more, or 95 mol% or more, or 96 mol% or more, or 97 mol% or more, or 98 mol% or more, or 99 mol% or more, or 100 mol% or less, or 70 mol% or more and 100 mol% or less, 80 mol% or more and 100 mol% or less, or 91 mol% or more and 100 mol% or less, or 92 mol% or more and 100 mol% or less, or 93 mol% or more and 100 mol% or less, or 94 mol% or more and 100 mol% or less, or 95 mol% or more and 100 mol% or less, or 96 mol% or more and 100 mol% or less, or 97 mol% or more and 100 mol% or less, or 98 mol% or more and 100 mol% or less, or 99 mol% or more and 100 mol% or less, with respect to the total repeating units contained in polyimide-based polymers.

That is, the polyimide-based polymer is composed of only the polyimide repeating unit represented by Chemical Formula 1 and the polyimide repeating unit represented by Chemical Formula 2, or most thereof can be composed of the polyimide repeating unit represented by Chemical Formula 1 and the polyimide repeating unit represented by Chemical Formula 2.

The weight average molecular weight (measured by GPC) of the polyimide-based polymer is not particularly limited, but may be, for example, 1000 g/mol or more and 200000 g/mol or less, or 10000 g/mol or more and 200000 g/mol or less.

Because the polyimide-based polymer according to the present disclosure can exhibit excellent colorless and transparent properties while maintaining properties such as heat resistance and mechanical strength as they are due to a rigid structure, it can be used in a diverse range of fields such as device substrate, display cover substrate, optical film, integrated circuit (IC) package, adhesive film, multilayer FRC (flexible printed circuit), tape, touch panel, protective polymer film for optical disc, etc. In particular, it can be suitable for display cover substrate.

More specifically, examples of the method of synthesizing the polyimide-based polymer film are not particularly limited, and, for example, a method of manufacturing a film including a step of coating a resin composition containing the polyimide-based polymer onto a substrate to form a coating film (step 1); a step of drying the coating film (step 2); and a step of heat-treating and curing the dried coating film (step 3) can be used.

Step 1 is a step of coating the resin composition containing the above-mentioned polyimide-based polymer onto a substrate to form a coating film. The method of coating the resin composition containing the polyimide-based polymer onto a substrate is not particularly limited, and for example, a method such as screen printing, offset printing, flexographic printing, inkjet, and the like can be used.

Further, the resin composition containing the polyimide may be in the form that is dissolved or dispersed in an organic solvent. In the case of having such form, for example, when the polyimide is synthesized in the organic solvent, the solution may be the reaction solution thus obtained itself or may be a solution obtained by diluting the reaction solution with another solvent. Further, when the polyimide is obtained as powder, the solution may be a solution obtained by dissolving the powder in an organic solvent.

Specific examples of the organic solvent include toluene, N,N-dimethylformamide, N,N-dimethylacetamide, N-methyl-2-pyrrolidone, N-methylcaprolactam, 2-pyrrolidone, N-ethylpyrrolidone, N-vinylpyrrolidone, dimethylsulfoxide, tetramethylurea, pyridine, dimethyl sulfone, hexamethyl sulfoxide, γ-butyrolactone, 3-methoxy-N,N-dimethylpropanamide, 3-ethoxy-N,N-dimethylpropanamide, 3-butoxy-N,N-dimethylpropanamide, 1,3-dimethyl-imidazolidinone, ethyl amyl ketone, methyl nonyl ketone, methyl ethyl ketone, methyl isoamyl ketone, methyl isopropyl ketone, cyclohexanone, ethylene

carbonate, propylene carbonate, diglyme, 4-hydroxy-4-methyl-2-pentanone, ethylene glycol monomethyl ether, ethylene glycol monomethyl ether acetate, ethylene glycol monoethyl ether, ethylene glycol monoethyl ether acetate, ethylene glycol monopropyl ether, ethylene glycol monopropyl ether acetate, ethylene glycol monoisopropyl ether, ethylene glycol monoisopropyl ether acetate, ethylene glycol monobutyl ether, ethylene glycol monobutyl ether acetate and the like. They can be used alone or in combination of two or more.

The resin composition containing the polyimide-based polymer may include the solid in such an amount that the solution has an appropriate viscosity in consideration of processability such as a coating property during the film forming process. For example, the content of the composition may be adjusted so that the total content of the solid is 5% by weight or more and 25% by weight or less, or may be adjusted to 5% by weight or more and 20% by weight or less, or 5% by weight or more and 15% by weight or less.

In addition, the resin composition containing the polyimide-based polymer may further include other components in addition to the organic solvent. In a non-limiting example, when the resin composition containing the polyimide-based polymer is coated, additives capable of improving the uniformity of the film thickness and the surface smoothness, or improving the adhesion with a substrate, or changing the dielectric constant and conductivity, or increasing the denseness, may be further included. Examples of these additives include surfactants, silane-based compounds, dielectrics or crosslinking compounds, etc.

Step 2 is a step of drying the coating film formed by coating a resin composition containing the polyimide-based polymer onto a substrate.

The step of drying the coating film may be performed by a heating means such as a hot plate, a hot-air circulation furnace, an infrared furnace and the like, and the drying may be performed at a temperature of 50°C or more and 150°C or less, or 50°C or more and 100°C or less.

Step 3 is a step of heat-treating and curing the dried coating film. In this case, the heat treatment may be performed by a heating means such as a hot plate, a hot-air circulation furnace, an infrared furnace and the like, and the heat treatment can be performed at a temperature of 200°C or more, or 200°C or more and 300°C or less, or 400 °C or more, or 400 °C or more and 500 °C or less.

The thickness of the polyimide-based polymer film is not particularly limited, but for example, it can be freely adjusted within the range of 0.01 $\mu$m or more and 1000 $\mu$m or less. If the thickness of the polyimide-based polymer film increases or decreases by a specific value, the physical properties measured in the polyimide-based polymer film may also change by a certain numeral value.

Meanwhile, the polyimide-based polymer film of the one embodiment has a residual stress with an inorganic material substrate based on a thickness of 10 $\mu$m, of 55 MPa or less, or 50 MPa or less, or 48 MPa or less, or 40 MPa or less, or 31 MPa or less, or 1 MPa or more, or 1 MPa to 55 MPa, or 1 MPa to 50 MPa, or 1 MPa to 48 MPa, or 1 MPa to 40 MPa, or 1 MPa to 31 MPa, or 10 MPa to 48 MPa, or 20 MPa to 48 MPa, or 30 MPa to 48 MPa, or 30.4 MPa to 48 MPa, or 30.4 MPa to 40 MPa, or 30.4 MPa to 32 MPa, or 33 MPa to 40 MPa, or 41 MPa to 48 MPa. As the residual stress with the inorganic material substrate is lowered in this way, the polyimide-based polymer film according to one embodiment reduces the residual stress, thereby solving defects caused by detachment phenomenon during panel process.

Examples of the method and device for measuring the residual stress are not particularly limited, and various methods conventionally used for measuring residual stress can be applied without limitation. For example, the residual stress of the polyimide-based polymer film can be measured using a residual stress gauge. Further, an example of the inorganic material substrate may be a wafer substrate.

The residual stress can be measured from the polyimide-based polymer film sample having a thickness of $10\pm1$ $\mu$m. If the thickness of the polyimide-based polymer film increases or decreases by a specific value, the physical properties measured in the polyimide-based polymer film may also change by a certain numerical value.

If the residual stress of the polyimide-based polymer film with the inorganic material substrate based on a thickness of 10 $\mu$m excessively increases to more than 55 MPa, due to the occurrence of warpage in the polyimide polymer film that has been cured at a high temperature of 400°C or more, defects caused by detachment phenomenon may occur during panel process.

Meanwhile, the polyimide-based polymer film of the one embodiment may have a thickness direction retardation value based on a thickness of 10 $\mu$m, of 100 nm or less, or 90 nm or less, or 80 nm or less, or 73 nm or less, or 1 nm or more, or 1 nm to 100 nm, or 1 nm to 90 nm, or 1 nm to 80 nm, or 1 nm to 73 nm, or 73 nm to 89 nm, or 73 nm to 79 nm, or 80 nm to 89 nm, or 80 nm to 85 nm, or 86 nm to 89 nm. In this manner, the optical isotropy is increased through the low retardation $R_{th}$ characteristic in the thickness direction, and thus, the diagonal viewing angle of the display to which the polyimide-based polymer film is applied can be secured to realize excellent visibility.

Such a low retardation appears to be achieved by reducing the refractive index difference between the plane direction and the thickness direction, using, as the monomer used in the production of polyimide-based polymer films, m-PDA (m-phenylenediamine) which is a diamine with an asymmetric structure, as will be described later.

More specifically, in the case of a polyimide having a planar linear main-chain structure, the refractive index in

the thickness direction is low because polyimides are packed side by side and stacked, while the refractive index in the thickness direction may increase because polyimide with a curved main-chain structure is not properly packed molecules.

The thickness direction retardation can be measured at a wavelength of 532 nm, and examples of the measuring method and device are not particularly limited, and various methods conventionally used for measuring the retardation in the thickness direction can be applied without limitation.

The thickness direction retardation may be measured from the polyimide-based polymer film sample having a thickness of 10±1 μm. When the thickness of the polyimide-based polymer film increases or decreases by a specific numerical value, the physical properties measured from the polyimide-based polymer film may also change by a certain numerical value.

Specifically, the thickness direction retardation $R_{th}$ can be calculated according to the following Equation 1.

[Equation 1]

$$R_{th}\,(nm) = |[(n_x + n_y) / 2] - n_z| \times d$$

wherein, in Equation 1, $n_x$ is the largest refractive index among in-plane refractive indices of the polyimide-based polymer film measured with light having a wavelength of 532 nm; $n_y$ is a refractive index perpendicular to $n_x$ among in-plane refractive indices of the polyimide-based polymer film measured with light having a wavelength of 532 nm; $n_z$ is the thickness direction refractive index of the polyimide resin film measured with light having a wavelength of 532 nm; and d is the thickness of the polyimide-based polymer film.

That is, the thickness direction retardation $R_{th}$ is a value obtained by multiplying the film thickness by the absolute value of the difference between the thickness direction refractive index value ($n_z$) and the average value $[(n_x + n_y)/2]$ of the in-plane refractive index value. As the difference between the thickness direction refractive index value $n_z$ and the average value $[(n_x+n_y)/2]$ of the in-plane refractive index values is smaller, it can exhibit the lower value.

As the polyimide-based polymer film satisfies the retardation value at a thickness of 10 μm of 100 nm or less, the difference between the thickness direction refractive index value ($n_z$) and the average value of the in-plane refractive index value $[(n_x+n_y)/_2]$ decreases on the display to which the polyimide-based polymer film is applied, thereby realizing excellent visibility.

When the thickness direction retardation value of the polyimide-based polymer film at a thickness of 10 μm is excessively increased to more than 100 nm, or the like, a distortion phenomenon occurs in a structure where polyimide exists on the upper part, when light is transmitted at the time of implementing a transparent display. Thus, there is a technical limit in that the refraction of transmitted light cannot be corrected even with a compensation film that compensates up to 45 nm.

Meanwhile, the polyimide-based polymer film has a haze value based on a thickness of 10 μm, of 10% or less, of 1% or less, of 0.1% or more, of 0.1% to 10%, of 0.1% to 1%, of 0.26% to 0.57%, of 0.26% to 0.4%, of 0.41% to 0.54%, of 0.55% to 0.57%. The haze may be measured from the polyimide-based polymer film sample having a thickness of 10±1 μm. When the thickness of the polyimide-based polymer film increases or decreases by a specific value, the physical properties measured in the polyimide-based polymer film may also change by a certain numerical value.

The polyimide-based polymer film has a Bow value based on a thickness of 10 μm, of 50 μm or less, or 48 μm or less, or 35 μm or less, or 31 μm or less, or 1 μm or more, or 1 μm to 50 μm, or 1 μm to 48 μm, or 1 μm to 35 μm, or 1 μm to 31 μm, or 10 μm to 48 μm, or 20 μm to 48 μm, or 30.11 μm to 47.6 μm, or 30.11 μm to 40 μm, or 30.11 μm to 32 μm, or 33 μm to 40 μm, or 41 μm to 47.6 μm. The Bow, which is also referred to as a warpage, is a kind of surface flatness characteristic of a material, and for a specific explanation, such as a specific measurement method, various methods well known in a semiconductor wafer substrate producing field can be applied without limitation.

Specifically, the Bow 3 can be defined as the distance on the central axis 4 between the thickness central plane 1 and the reference plane 2 (best fit plane of thickness central plane), as shown in FIG. 1 below.

The thickness center plane 1 means a plane connecting points that are half (t/2) of the thickness t in the object to be measured as shown in FIG. 1 below.

The reference plane 2 means a cross-section formed by a straight line connecting the thickness center points of both ends of the object to be measured, as shown in FIG. 1 below.

The central axis 4 means a straight line perpendicular to the horizontal plane passing through the center of gravity of the object to be measured, as shown in FIG. 1 below.

As an example of the method of measuring the Bow 3, a laser stress analyzer can be used, and the stress analyzer measures the intensity of the light reflected by the back surface of the sample to be measured, and can automatically calculate and determine the Bow value using a method of mathematically analyzing it.

The Bow may be measured for the polyimide-based polymer film sample of the one embodiment having a thickness of 10 ± 1 μm.

The polyimide-based polymer film sample used for the Bow measurement may include a pure polyimide-based polymer film; or a laminate containing a substrate film and a polyimide-based polymer film coated on the substrate film. Examples of the substrate film are not particularly limited, and a glass substrate, a wafer substrate, or a mixture thereof, etc., can be used without limitation.

When the polyimide-based polymer film sample used for the Bow measurement is made of only pure polyimide-based polymer film, the Bow can be automatically measured through the results of analyzing a polyimide-based polymer film sample with a laser stress analyzer. For example, a pure polyimide-based polymer film may be secured through the process of peeling the substrate film from a laminate containing a substrate film and the polyimide-based polymer film coated on the substrate film.

If the Bow value of the polyimide-based polymer film measured at a thickness of 10 $\mu$m is excessively increased to more than 50 $\mu$m or the like, due to the occurrence of warpage in the polyimide-based polymer film that has been cured at a high temperature of 400°C or more, defects caused by detachment phenomenon may occur during the panel process.

Further, the polyimide-based polymer film may have a yellow index based on a thickness of 10 $\mu$m, of 25 or less, or 22 or less, or 20 or less, or 15 or less, or 0.1 or more, or 0.1 to 25, or 0.1 to 22, or 0.1 to 20, or 0.1 to 15, or 14.3 to 22.4, or 14.3 to 19, or 20 to 22.4, or 20 to 21.5, or 21.6 to 22.4. If the yellow index of the polyimide-based polymer film measured at a thickness of 10 $\mu$m is excessively increased to more than 25 or the like, there is a limit in that the degree of yellow discoloration of the polyimide-based polymer film increases, which makes it difficult to produce a colorless and transparent film.

Examples of the method and device for measuring the yellow index of the one embodiment are not particularly limited, and various methods conventionally used for measuring the YI can be applied without limitation. As an example, it can be measured using a color meter (Color-Eye 7000A produced by GRETAGMACBETH).

The yellow index can be measured from the polyimide-based polymer film sample having a thickness of 10$\pm$1 $\mu$m. When the thickness of the polyimide-based polymer film increases or decreases by a specific numerical value, the physical properties measured from the polyimide-based polymer film may also change by a certain numerical value.

Meanwhile, the polyimide-based polymer film of the one embodiment may have a thickness direction retardation based on a thickness of 5 $\mu$m, of 100 nm or less, or 90 nm or less, or 80 nm or less, or 70 nm or less, or 68 nm or less, or 65 nm or less, or 1 nm or more, or 1 nm to 100 nm, or 1 nm to 90 nm, or 1 nm to 80 nm, or 1 nm to 70 nm, or 1 nm to 68 nm, or 1 nm to 65 nm, or 65 nm to 79 nm, or 65 nm to 69 nm, or 70 nm to 79 nm, or 70 nm to 74 nm, or 75 nm to 79 nm. The details concerning the thickness direction retardation $R_{th}$ are the same as those described above except that the measurement is performed for the polyimide-based polymer film sample of one embodiment having a thickness of 5$\pm$1 $\mu$m.

Further, the polyimide-based polymer film of the one embodiment may have a residual stress with an inorganic material substrate based on a thickness of 5 $\mu$m, of 52 MPa or less, or 50 MPa or less, or 45 MPa or less, or 43 MPa or less, or 42 MPa or less, or 1 MPa or more, or 1 MPa to 52 MPa, or 1 MPa to 50 MPa, or 1 MPa to 45 MPa, or 1 MPa to 43 MPa, or 1 MPa to 42 MPa, or 41.7 MPa to 48.9 MPa, or 41.7 MPa to 44 MPa, or 41.7 MPa to 42 MPa, or 43 MPa to 44 MPa, or 45 MPa to 48.9 MPa. The details concerning the residual stress with an inorganic material substrate are the same as those described above except that the measurement is performed for the polyimide-based polymer film sample of one embodiment having a thickness of 5$\pm$1 $\mu$m.

Further, the polyimide-based polymer film of the one embodiment may have a Bow value based on a thickness of 5 $\mu$m, of 25 $\mu$m or less, or 24.5 $\mu$m or less, or 24 $\mu$m or less, or 23 $\mu$m or less, or 1 $\mu$m or more, or 1 $\mu$m to 25 $\mu$m, or 1 $\mu$m to 24.5 $\mu$m, or 1 $\mu$m to 24 $\mu$m, or 1 $\mu$m to 23 $\mu$m, or 22.49 $\mu$m to 24.7 $\mu$m, or 22.49 $\mu$m to 24.2 $\mu$m, or 22.49 $\mu$m to 23.2 $\mu$m, or 23.3 $\mu$m to 24.2 $\mu$m, or 24.3 $\mu$m to 24.7 $\mu$m. The details concerning the Bow are the same as those described above except that the measurement is performed for the polyimide-based polymer film sample of one embodiment having a thickness of 5$\pm$1 $\mu$m.

Further, the polyimide-based polymer film may have a yellow index based on a thickness of 5 $\mu$m, of 15 or less, or 13.9 or less, or 13 or less, or 10 or less, or 9 or less, or 0.1 or more, or 0.1 to 15, or 0.1 to 13.9, or 0.1 to 13, or 0.1 to 10, or 0.1 to 9, or 8.4 to 10.8, or 8.4 to 9, or 9.1 to 10.8, or 9.1 to 10, or 10.1 to 10.8. The details concerning the yellow index are the same as those described above except that the measurement is performed for the polyimide-based polymer film sample of one embodiment having a thickness of 5$\pm$1 $\mu$m.

Meanwhile, the polyimide-based polymer film has a Bow value based on a thickness of 2 $\mu$m, of less than 12 $\mu$m, 11.9 $\mu$m or less, or 11.6 $\mu$m or less, or 11.5 $\mu$m or less, or 11.2 $\mu$m or less, or 1 $\mu$m or more, or 1 $\mu$m or more and less than 12 $\mu$m, or 1 $\mu$m to 11.9 $\mu$m, or 1 $\mu$m to 11.6 $\mu$m, or 1 $\mu$m to 11.5 $\mu$m, or 1 $\mu$m to 11.2 $\mu$m, or 11.2 $\mu$m to 11.85 $\mu$m, or 11.2 $\mu$m to 11.6 $\mu$m, or 11.2 $\mu$m to 11.3 $\mu$m, or 11.4 $\mu$m to 11.6 $\mu$m, or 11.7 $\mu$m to 11.85 $\mu$m. The details concerning the Bow are the same as those described above except that the measurement is performed for the polyimide-based polymer film sample of one embodiment having a thickness of 2$\pm$1 $\mu$m.

Further, the polyimide-based polymer film of the one embodiment may have a thickness direction retardation measured at a thickness of 2 $\mu$m, of 40 nm or less, or 30 nm or less, or 28 nm or less, or 25 nm or less, or 20 nm or

less, or 1 nm or more, or 1 nm to 40 nm, or 1 nm to 30 nm, or 1 nm to 28 nm, or 1 nm to 25 nm, or 1 nm to 20 nm, or 20 nm to 29 nm, or 20 nm to 24 nm, or 24 nm to 29 nm, or 24 nm to 28 nm, or 28 nm to 29 nm. The details concerning the thickness direction retardation ($R_{th}$) are the same as those described above except that the measurement is performed for the polyimide-based polymer film sample of one embodiment having a thickness of 2±1 $\mu$m.

Further, the polyimide-based polymer film of the embodiment has a residual stress with inorganic material substrate based on a thickness of 2 $\mu$m, of 50 MPa or less, or 45 MPa or less, or 42 MPa or less, or 1 MPa or more, or 1 MPa to 50 MPa, or 1 MPa to 45 MPa, or 1 MPa to 42 MPa, or 41.3 MPa to 48.6 MPa, or 41.3 MPa to 45 MPa, or 41.3 MPa to 43 MPa, or 43 MPa to 45 MPa, or 46MPa to 48.6 MPa. The details concerning the residual stress with inorganic material substrate are the same as those described above except that the measurement is performed for the polyimide-based polymer film sample of one embodiment having a thickness of 2±1 $\mu$m.

Further, the polyimide-based polymer film may have a yellow index measured at a thickness of 2 $\mu$m, of 10 or less, or 7 or less, or 6.5 or less, or 5 or less, or 0.1 or more, or 0.1 to 10, or 0.1 to 7, or 0.1 to 6.5, or 0.1 to 5, or 3.3 to 4.48, or 3.3 to 3.9, or 4 to 4.48, or 4 to 4.2, or 4.2 to 4.48. The details concerning the yellow index are the same as those described above except that the measurement is performed for the polyimide-based polymer film sample of one embodiment having a thickness of 2±1 $\mu$m.

On the other hand, according to another embodiment of the disclosure, there can be provided a polyimide-based polymer film comprising a polyimide-based polymer which contains a polyimide repeating unit represented by the following Chemical Formula 1 and a polyimide repeating unit represented by the following Chemical Formula 2, wherein a Bow value based on a thickness of 5 $\mu$m is 25 $\mu$m or less, and wherein a thickness direction retardation $R_{th}$ value based on a thickness of 5 ,um is 100 nm or less.

[Chemical Formula 1]

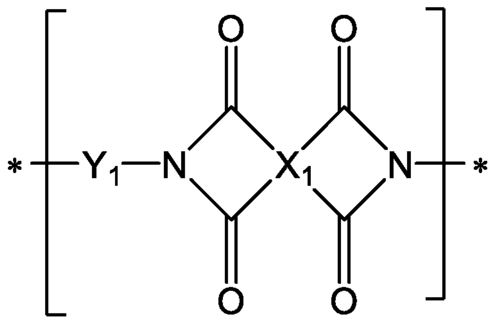

wherein, in Chemical Formula 1, $X_1$ is an aromatic tetravalent functional group, and $Y_1$ is an aromatic divalent functional group having 6 to 10 carbon atoms,

[Chemical Formula 2]

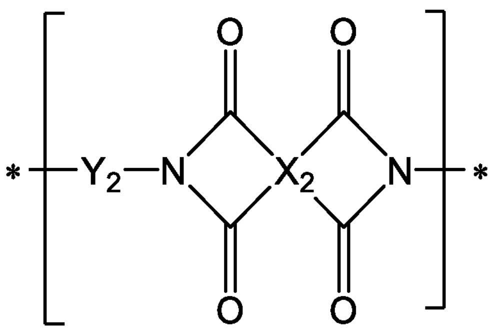

wherein, in Chemical Formula 2,

$X_2$ is an aromatic tetravalent functional group, and $Y_2$ is an aromatic divalent functional group containing a polycyclic ring. The details concerning the polyimide repeating unit represented by Chemical Formula 1, a polyimide repeating unit represented by Chemical Formula 2, and a polyimide-based polymer may include all of the contents described above

in the one embodiment.

The molar ratio between the polyimide repeating unit represented by Chemical Formula 1 and the polyimide repeating unit represented by Chemical Formula 2 may be 9:1 to 1:9, or 9:1 to 2:1, or 6:1 to 2:1, or 6:1 to 3.5:1, or 3.5:1 to 2:1, or 1:2 to 1:9, or 1:2 to 1:6, or 1:3 to 1:5.

Meanwhile, the polyimide-based polymer film of the other embodiment may have a thickness direction retardation value based on a thickness of 5 $\mu$m, of 100 nm or less, or 90 nm or less, or 80 nm or less, or 70 nm or less, or 68 nm or less, or 65 nm or less, or 1 nm or more, or 1 nm to 100 nm, or 1 nm to 90 nm, or 1 nm to 80 nm, or 1 nm to 70 nm, or 1 nm to 68 nm, or 1 nm to 65 nm, or 65 nm to 79 nm, or 65 nm to 69 nm, or 70 nm to 79 nm, or 70 nm to 74 nm, or 75 nm to 79 nm. The details concerning the thickness direction retardation $R_{th}$ are the same as those described above except that the measurement is performed for the polyimide-based polymer film sample of one embodiment having a thickness of 5$\pm$1 $\mu$m.

Further, the polyimide-based polymer film of the embodiment has a residual stress with inorganic material substrate based on a thickness of 5 $\mu$m, of 52 MPa or less, or 50 MPa or less, or 45 MPa or less, or 43 MPa or less, or 42 MPa or less, or 1 MPa or more, or 1 MPa to 52 MPa, or 1 MPa to 50 MPa, or 1 MPa to 45 MPa, or 1 MPa to 43 MPa, or 1 MPa to 42 MPa, or 41.7 MPa to 48.9 MPa, or 41.7 MPa to 44 MPa, or 41.7 MPa to 42 MPa, or 43 MPa to 44 MPa, or 45 MPa to 48.9 MPa. The details concerning the residual stress with inorganic material substrate are the same as those described above except that the measurement is performed for the polyimide-based polymer film sample of one embodiment having a thickness of 5$\pm$1 $\mu$m.

Meanwhile, the polyimide-based polymer film has a Bow value based on a thickness of 5 $\mu$m, of 25 $\mu$m or less, or 24.5 $\mu$m or less, or 24 $\mu$m or less, or 23 $\mu$m or less, or 1 $\mu$m or more, or 1 $\mu$m to 25 $\mu$m, or 1 $\mu$m to 24.5 $\mu$m, or 1 $\mu$m to 24 $\mu$m, or 1 $\mu$m to 23 $\mu$m, or 22.49 $\mu$m to 24.7 $\mu$m, or 22.49 $\mu$m to 24.2 $\mu$m, or 22.49 $\mu$m to 23.2 $\mu$m, or 23.3 $\mu$m to 24.2 $\mu$m, or 24.3 $\mu$m to 24.7 $\mu$m. The details concerning the Bow are the same as those described above except that the measurement is performed for the polyimide-based polymer film sample of one embodiment having a thickness of 5$\pm$1 $\mu$m.

Further, the polyimide-based polymer film may have a yellow index measured at a thickness of 5 $\mu$m, of 15 or less, or 13.9 or less, or 13 or less, or 10 or less, or 9 or less, or 0.1 or more, or 0.1 to 15, or 0.1 to 13.9, or 0.1 to 13, or 0.1 to 10, or 0.1 to 9, or 8.4 to 10.8, or 8.4 to 9, or 9.1 to 10.8, or 9.1 to 10, or 10.1 to 10.8. The details concerning the yellow index are the same as those described above except that the measurement is performed for the polyimide-based polymer film sample of one embodiment having a thickness of 5$\pm$1 $\mu$m.

Meanwhile, the polyimide-based polymer film has a Bow value based on a thickness of 2 $\mu$m, of less than 12 $\mu$m, 11.9 $\mu$m or less, or 11.6 $\mu$m or less, or 11.5 $\mu$m or less, or 11.2 $\mu$m or less, or 1 $\mu$m or more, or 1 $\mu$m or more and less than 12 $\mu$m, or 1 $\mu$m to 11.9 $\mu$m, or 1 $\mu$m to 11.6 $\mu$m, or 1 $\mu$m to 11.5 $\mu$m, or 1 $\mu$m to 11.2 $\mu$m, or 11.2 $\mu$m to 11.85 $\mu$m, or 11.2 $\mu$m to 11.6 $\mu$m, or 11.2 $\mu$m to 11.3 $\mu$m, or 11.4 $\mu$m to 11.6 $\mu$m, or 11.7 $\mu$m to 11.85 $\mu$m. The details concerning the Bow are the same as those described above except that the measurement is performed for the polyimide-based polymer film sample of one embodiment having a thickness of 2$\pm$1 $\mu$m.

Meanwhile, the polyimide-based polymer film of the other embodiment may have a thickness direction retardation value based on a thickness of 2 $\mu$m, of 40 nm or less, or 30 nm or less, or 28 nm or less, or 25 nm or less, or 20 nm or less, or 1 nm or more, or 1 nm to 40 nm, or 1 nm to 30 nm, or 1 nm to 28 nm, or 1 nm to 25 nm, or 1 nm to 20 nm, or 20 nm to 29 nm, or 20 nm to 24 nm, or 24 nm to 29 nm, or 24 nm to 28 nm, or 28 nm to 29 nm. The details concerning the thickness direction retardation $R_{th}$ are the same as those described above except that the measurement is performed for the polyimide-based polymer film sample of one embodiment having a thickness of 2$\pm$1 $\mu$m.

Further, the polyimide-based polymer film of the embodiment has a residual stress with inorganic material substrate based on a thickness of 2,um, of 50 MPa or less, or 45 MPa or less, or 42 MPa or less, or 1 MPa or more, or 1 MPa to 50 MPa, or 1 MPa to 45 MPa, or 1 MPa to 42 MPa, or 41.3 MPa to 48.6 MPa, or 41.3 MPa to 45 MPa, or 41.3 MPa to 43 MPa, or 43 MPa to 45 MPa, or 46MPa to 48.6 MPa. The details concerning the residual stress with inorganic material substrate are the same as those described above except that the measurement is performed for the polyimide-based polymer film sample of one embodiment having a thickness of 2$\pm$1 $\mu$m.

Further, the polyimide-based polymer film may have a yellow index measured at a thickness of 2 $\mu$m, of 10 or less, or 7 or less, or 6.5 or less, or 5 or less, or 0.1 or more, or 0.1 to 10, or 0.1 to 7, or 0.1 to 6.5, or 0.1 to 5, or 3.3 to 4.48, or 3.3 to 3.9, or 4 to 4.48, or 4 to 4.2, or 4.2 to 4.48. The details concerning the yellow index are the same as those described above except that the measurement is performed for the polyimide-based polymer film sample of one embodiment having a thickness of 2$\pm$1 $\mu$m.

## 2. Substrate for Display Device

Meanwhile, according to another embodiment of the present disclosure, there can be provided a substrate for display device including the polyimide-based polymer film of the other embodiment. The details concerning the polyimide-based polymer film may include all of the contents described above in the one embodiment or the other embodiment.

The display device including the substrate may include a liquid crystal display (LCD), an organic light emitting diode (OLED), a flexible display, a rollable display or foldable display, or the like.

The display device may have various structures according to an application field and a specific shape, and may include, for example, a cover plastic window, a touch panel, a polarizing plate, a barrier film, a light emitting device (such as an OLED device), a transparent substrate, or the like.

The polyimide-based polymer film of another embodiment described above may be used in various applications such as a substrate, an outer protective film or a cover window in such various display devices, and more specifically, may be applied to a substrate.

For example, the display device substrate may have a structure in which a device protective layer, a transparent electrode layer, a silicon oxide layer, a polyimide-based polymer film, a silicon oxide layer, and a hard coating layer are sequentially stacked.

The transparent polyimide substrate may further include a silicon oxide layer formed between the transparent polyimide-based polymer film and the cured layer in order to further improve the solvent resistance, water permeability and optical properties thereof, and the silicon oxide layer may be produced by curing polysilazane.

Specifically, the silicon oxide layer may, before forming a coating layer on at least one surface of the transparent polyimide-based polymer film, be formed by curing the coated polysilazane after coating and drying a solution containing polysilazane.

The substrate for a display device according to the present disclosure can provide a transparent polyimide cover substrate having solvent resistance, optical properties, water permeability and scratch resistance while having excellent bow properties and impact resistance by including the above-mentioned device protective layer.

### 3. Optical Device

Meanwhile, according to yet another embodiment of the present disclosure, there can be provided an optical device including the polyimide-based polymer film of the other embodiment. The details concerning the polyimide-based polymer film may include all of those described above in the one embodiment.

The optical device may include all kinds of devices using properties realized by light, and may be, for example, a display device. Specific examples of the display device include a liquid crystal display (LCD), an organic light emitting diode (OLED), a flexible display, a rollable display or foldable display device, or the like, but is not limited thereto.

The optical device may have various structures according to the application field and the specific shape, and for example, it may have a structure including a cover plastic window, a touch panel, a polarizing plate, a barrier film, a light emitting device (such as an OLED device), a transparent substrate, or the like.

The polyimide-based polymer film of one embodiment or the other embodiment described above may be used in various applications such as a substrate, an outer protective film or a cover window in various optical devices, and more specifically, may be applied to a substrate.

### [Advantageous Effects]

According to the present disclosure, a polyimide-based polymer film that can realize excellent warpage properties and low retardation, and a substrate for display device and an optical device using the same is provided.

### [BRIED DESRIPTION OF THE DRAWINGS]

FIG. 1 shows a cross-sectional view for measuring Bow of polyimide-based polymer films obtained in Examples and Comparative Examples.

### [DETAILED DESCRIPTION OF THE EMBODIMENTS]

Hereinafter, embodiments of the present disclosure will be described in more detail by way of examples. However, these examples are provided for illustrative purposes only, and are not intended to limit the scope of the present disclosure.

**<Example and Comparative Example: Preparation of polyimide precursor composition and polyimide film>**

Example 1-3

(1) Preparation of polyimide precursor composition

The organic solvent DEAc was filled in a reactor under a stream of nitrogen, and then m-phenylenediamine (1,3-phenylenediamine, m-PDA) and 9,9'-bis(4-aminophenyl)fluorene (FDA) were added and dissolved at the same temperature while maintaining the temperature of the reactor to 25°C. To the solution to which the m-phenylenediamine (1,3-phenylenediamine, m-PDA) and 9,9'-bis(4-aminophenyl)fluorene (FDA) were added, 3,3',4,4'-biphenyltetracarboxylic dianhydride (BPDA) was added as an acid dianhydride at the same temperature, and stirred for 24 hours to prepare a polyimide precursor composition. At this time, the molar ratios of m-PDA, FDA, and BPDA are as shown in Table 1 below.

(2) Preparation of Polyimide Film

The polyimide precursor composition was spin-coated on a glass substrate. The glass substrate coated with the polyimide precursor composition was placed in an oven, heated at a rate of 5°C/min, and maintained at 80° C for 30 minutes, at 250°C for 30 minutes, and at 400°C for 30 minutes to perform a curing process. After completion of the curing process, the glass substrate was immersed in water to peel off the film formed on the glass substrate, and dried in an oven at 100°C to prepare a polyimide film having a thickness of 10 $\mu$m (including an error of $\pm$1 $\mu$m).

Comparative Examples 1 to 3

A polyimide precursor composition and a polyimide film were prepared in the same manner as in Example 1, except that the molar ratios of m-PDA, FDA, p-PDA(1,4-phenylenediamine) and BPDA were changed as shown in Table 1 below.

Comparative Example 4

(1) Preparation of polyimide precursor composition

The organic solvent DEAc was filled in a reactor under a stream of nitrogen, and then 2,2'-bis(trifluoromethyl)benzidine (TFMB), m-phenyl diamine (1,3-phenylenediamine, m-PDA) and 9,9'-bis(4-aminophenyl)fluorene (FDA) were added and dissolved at the same temperature while maintaining the temperature of the reactor to 25°C. To the solution to which 2,2'-bis(trifluoromethyl)benzidine (TFMB), m-phenyl diamine (1,3-phenylenediamine, m-PDA) and 9,9'-bis(4-aminophenyl)fluorene (FDA) were added, 4,4'-(hexafluoroisopropylidene)diphthalic anhydride (6FDA) was added as an acid dianhydride at the same temperature, and stirred for 24 hours to prepare a polyimide precursor composition. At this time, the molar ratios of 6FDA, TFMB, m-PDA and FDA were 100/70/20/10(6FDA/TFMB/m-PDA/FDA).

(2) Preparation of Polyimide Film

The polyimide precursor composition was spin-coated on a glass substrate. The glass substrate coated with the polyimide precursor composition was placed in an oven, heated at a rate of 5°C/min, and maintained at 80° C for 30 minutes, at 250°C for 30 minutes, and at 400°C for 30 minutes to perform a curing process. After completion of the curing process, the glass substrate was immersed in water to peel off the film formed on the glass substrate, and dried in an oven at 100°C to prepare a polyimide film having a thickness of 10 $\mu$m (including an error of $\pm$1 $\mu$m).

Comparative Examples 5 to 6

A polyimide precursor composition and a polyimide film were prepared in the same manner as in Example 1, except that the molar ratios of m-PDA, FDA and BPDA were changed as shown in Table 1 below.

**<Experimental Example: Measurement of Physical Properties of Polyimide Precursor Composition and Polyimide Films Obtained in Examples and Comparative Examples>**

The physical properties of the polyimide precursor composition and the polyimide films obtained in Examples and Comparative Examples were measured by the following methods, and the results are shown in Table 1 below.

**1. Yellow index (YI)**

The yellow index of the polyimide films prepared in Examples and Comparative Examples were measured using a color meter (Color-Eye 7000A produced by GRETAGMACBETH).

2. Haze

The haze values of the polyimide films were measured using a Hazemeter (NDH-5000).

**3. Thickness Direction Retardation ($R_{th}$)**

The value of the refractive index of the polyimide film prepared in Examples and Comparative Examples with respect to light at 532 nm was input using the trade name "AxoScan" produced by AXOMETRICS as a measuring device, and then the retardation in the thickness direction and in the plane direction was measured using light with a wavelength of 532 nm under conditions of temperature: 25°C and humidity: 40%. The obtained retardation measured value in the thickness direction (measured value by automatic measurement of the measuring device) was converted into a retardation value per 10 $\mu$m of film thickness, and shown in Table 1 below.

Specifically, the thickness direction retardation $R_{th}$ was calculated according to the following Equation 1.

[Equation 1]

$$R_{th}\,(nm) = |[(n_x + n_y) / 2] - n_z| \times d$$

wherein, in Equation 1, $n_x$ is the largest refractive index among in-plane refractive indices of the polyimide resin film measured with light having a wavelength of 532 nm; $n_y$ is a refractive index perpendicular to $n_x$ among in-plane refractive indices of the polyimide resin film measured with light having a wavelength of 532 nm; $n_z$ is the thickness direction refractive index of the polyimide resin film measured with light having a wavelength of 532 nm; and d is the thickness of the polyimide-based polymer film.

**4. Residual Stress and Bow**

The polyimide precursor composition prepared in Examples and Comparative Examples were spin-coated on a 6-inch silicon wafer with a thickness of 525um, on which the amount of warpage of the wafer was measured in advance using a residual stress gauge (FLX2320 by TENCOR), by means of a spin coater (manufactured by Koyo Lindberg Co.), and subjected to a heat curing treatment using an oven at 250°C, for 30 minutes and at 400°C for 30 minutes under a nitrogen atmosphere. After curing, a silicon wafer with a resin film attached thereto was prepared. The amount of warpage of the silicon wafer with the resin film attached thereto was measured with a residual stress gauge, and the absolute value of the difference value from the warpage amount of the wafer was expressed as a Real Bow value in advance, and the residual stress generated between the silicon wafer and the resin film was measured with a residual stress gauge.

The Bow is defined as the distance on the central axis between the thickness central plane of the sample to be measured and the reference plane (Best fit plane of thickness central plane) as shown in Figure 1 below, and the Bow measurement was measured using a stress analyzer (TENCOR FLX-2320) for the sample at room temperature.

[Table 1]

| Experimental Example Measurement Results of Examples and Comparative Examples | | | | | | | | | | |
|---|---|---|---|---|---|---|---|---|---|---|
| Category | | Example 1 | Exampl e2 | Examp le 3 | Compara tive Example 1 | Compara tive Example 2 | Compara tive Example 3 | Compara tive Example 4 | Compara tive Example 5 | Compara tive Example 6 |
| monomer molar ratio | | 100/80.7 5/20 (BPDA/m-PDA/FD A) | 100/73. 25/25 (BPDA/m-PDA/F DA) | 100/20 /80 (BPDA/m-PDA/F DA) | 100/98.7 (BPDA/p -PDA) | 100/98.7 5 (BPDA/m-PDA) | 100/100 (BPDA/ FDA) | 100/70/2 0/10 (6F DA/ TFMB/m-PDA/FD A) | 100/95/5 (BPDA/ m-PDA/FD A) | 100/5/95 (BPDA/ m-PDA/FD A) |
| Bas ed on 10 $\mu$m thic knes s | Content of solids (wt%) | 15.48 | 16.65 | 9.24 | 11.3 | 16.47 | 10.24 | 16.5 | 17.2 | 11.3 |
| | YI | 22.4 | 21.3 | 14.3 | 27.17 | 23.2 | 13.79 | 10.34 | 23.0 | 13.98 |
| | HAZE (% ) | 0.57 | 0.26 | 0.53 | 0.40 | 15.31 | 0.28 | 0.47 | 13.5 | 0.37 |
| | $R_{th}$(nm) | 89 | 80 | 73 | 2222 | 144 | 61 | 117 | 140 | 60 |
| | Residual stress(M Pa) | 30.4 | 33.2 | 48.0 | 4.6 | 44.1 | 55.7 | 53.3 | 45.2 | 56.2 |
| | Bow($\mu$m) | 30.11 | 34.27 | 47.6 | 4.22 | 43.23 | 52.3 | 52 | 44.6 | 55.2 |
| Bas ed on 5 $\mu$m thic knes s | Content of solids (%) | 10.28 | 16.65 | 9.24 | 11.3 | 16.47 | 10.24 | 16.5 | 17.2 | 11.3 |
| | YI | 10.8 | 9.2 | 8.4 | 14 | 12.1 | 8.2 | 6.2 | 12.0 | 8.9 |
| | $R_{th}$(nm) | 79 | 70 | 65 | 1200 | 110 | 60 | 65 | 110 | 62 |
| | Residual stress(M Pa) | 41.7 | 43.5 | 48.9 | 5.0 | 44.3 | 52.8 | 53.3 | 45.3 | 55.8 |
| | Bow($\mu$m) | 22.49 | 24.1 | 24.7 | 2.2 | 26.8 | 32.41 | 37.1 | 26.3 | 33.1 |

(continued)

| Experimental Example Measurement Results of Examples and Comparative Examples | | | | | | | | | | |
|---|---|---|---|---|---|---|---|---|---|---|
| Category | | Example 1 | Exampl e2 | Examp le 3 | Compara tive Example 1 | Compara tive Example 2 | Compara tive Example 3 | Compara tive Example 4 | Compara tive Example 5 | Compara tive Example 6 |
| monomer molar ratio | | 100/80.7 5/20 (BPDA/m-PDA/FD A) | 100/73. 25/25 (BPDA/m-PDA/F DA) | 100/20 /80 (BPDA/m-PDA/F DA) | 100/98.7 (BPDA/p -PDA) | 100/98.7 5 (BPDA/m-PDA) | 100/100 (BPDA/ FDA) | 100/70/2 0/10 (6F DA/ TFMB/m-PDA/FD A) | 100/95/5 (BPDA/ m-PDA/FD A) | 100/5/95 (BPDA/ m-PDA/FD A) |
| Bas ed on 2 $\mu$m thic kness | Content of solids (%) | 10.28 | 16.65 | 9.24 | 11.3 | 16.47 | 10.24 | 16.5 | 17.2 | 11.3 |
| | YI | 4.48 | 4.0 | 3.3 | 7.2 | 5.8 | 3.6 | 4.08 | 6.0 | 3.8 |
| | $R_{th}$(nm) | 29 | 27 | 20 | 542 | 53 | 20 | 23 | 50 | 22 |
| | Residual stress(M Pa) | 41.3 | 43.2 | 48.6 | 5.1 | 44.5 | 53.6 | 51.9 | 45.1 | 56.3 |
| | Bow($\mu$m) | 11.2 | 11.53 | 11.85 | 1.8 | 12.2 | 14.99 | 20.3 | 12.0 | 15.01 |

As shown in Table 1, it was confirmed that the polyimide films obtained in Examples 1 to 3 had a thickness direction retardation $R_{th}$ value of 73 nm to 89 nm, a haze of 0.26% to 0.57%, an YI of 14.3 to 22.4, a residual stress of 30.4 MPa to 48 MPa, and a Bow of 30.11 $\mu$m to 47.6 $\mu$m, based on a thickness of 10 $\mu$m.

On the other hand, it was confirmed that the polyimide film obtained in Comparative Example 1 had the thickness direction retardation $R_{th}$ value of 2222 nm based on a thickness of 10 $\mu$m, which rapidly increased compared to Examples, and thus failed to realize a low retardation, and that the polyimide film obtained in Comparative Example 2 had the thickness direction retardation $R_{th}$ value of 144 nm based on the thickness of 10 $\mu$m, which was increased compared to Examples, and had a haze of 15.31% based on the thickness of 10 $\mu$m, which increased compared to Examples, which resulted in a decrease in transparency.

In addition, the polyimide film obtained in Comparative Example 3 (based on the thickness of 10 $\mu$m) had a residual stress of 55.7 MPa and a Bow of 52.3 $\mu$m, which increased compared to Examples, and thus had a problem that a high level of flatness could not be achieved.

Meanwhile, it was confirmed that the polyimide films obtained in Examples 1 to 3 had a thickness direction retardation $R_{th}$ value of 65 nm to 79 nm, an YI of 8.4 to 10.8, a residual stress of 41.7 MPa to 48.9 MPa, and a Bow of 22.49 $\mu$m to 24.7 $\mu$m, based on a thickness of 5 $\mu$m.

On the other hand, the polyimide film obtained in Comparative Example 1 had a thickness direction retardation $R_{th}$ value of 1200 nm based on a thickness of 5 $\mu$m, which rapidly increased compared to Examples, and the polyimide film obtained in Comparative Example 2 had a thickness direction retardation $R_{th}$ value of 110 nm based on a thickness of 5 $\mu$m, which increased compared to Examples, and thus failed to realize a low retardation. In addition, the polyimide film obtained in Comparative Example 2 had a Bow of 26.8 $\mu$m based on a thickness of 5 $\mu$m, which increased compared to Examples, and thus had a problem that a high level of flatness could not be realized.

Further, the polyimide film (based on the thickness of 5 $\mu$m) obtained in Comparative Example 3 had a residual stress of 52.8 MPa and a Bow of 32.41 $\mu$m, which increased compared to Examples, and thus had a problem that a high level of flatness could not be realized.

Meanwhile, it was confirmed that the polyimide films obtained in Examples 1 to 3 had a thickness direction retardation $R_{th}$ value of 20 nm to 29 nm, an YI of 3.3 to 4.48, a residual stress of 41.3 MPa to 48.6 MPa, and a Bow of 11.2 $\mu$m to 11.85 $\mu$m, based on a thickness of 2 $\mu$m.

On the other hand, the polyimide film obtained in Comparative Example 1 had a thickness direction retardation $R_{th}$ value of 542 nm based on a thickness of 2 $\mu$m, which increased rapidly compared to Examples, and thus failed to realize a low retardation, and the polyimide film obtained in Comparative Example 2 had a thickness direction retardation $R_{th}$ value of 53 nm based on a thickness of 2 $\mu$m, which increased compared to Example 2, and has a Bow of 12.2 $\mu$m based on a thickness of 2 $\mu$m which increased compared to Examples, and thus had a problem that a high level of flatness could not be realized.

Further, the polyimide film obtained in Comparative Example 3 (based on the thickness of 2 $\mu$m) had a residual stress of 53.6 MPa and a Bow of 14.99 $\mu$m, which was increased compared to Examples, and thus had a problem that a high level of flatness could not be realized.

In addition, the polyimide film obtained in Comparative Example 4 failed to realize a low retardation because the thickness direction retardation $R_{th}$ value based on a thickness of 10 $\mu$m increased as compared to Examples, and also based on the thickness of 10 $\mu$m, thickness of 5 $\mu$m, and thickness of 2 $\mu$m, the residual stress and Bow increased compared to Examples, and thus had a problem that a high level of flatness could not be realized.

On the other hand, in the case of the polyimide film obtained in Comparative Example 5 the thickness direction retardation $R_{th}$ value based on a thickness of 10 $\mu$m, a thickness of 5 $\mu$m, and a thickness of 2 $\mu$m increased compared to Examples, similarly to Comparative Example 1, and thus failed to realize a low retardation, and in the case of the polyimide film obtained in Comparative Example 6, the residual stress and Bow based on the thickness of 10 $\mu$m, thickness of 5 $\mu$m, and thickness of 2 $\mu$m were increased compared to Examples, similarly to Comparative Example 3, and thus had a problem that a high level of flatness could not be realized.

## Claims

1. A polyimide-based polymer film comprising a polyimide-based polymer which contains a polyimide repeating unit represented by the following Chemical Formula 1 and a polyimide repeating unit represented by the following Chemical Formula 2,

   wherein a residual stress with an inorganic material substrate based on a thickness of 10 $\mu$m is 55 MPa or less, and
   wherein a thickness direction retardation $R_{th}$ value based on a thickness of 10 $\mu$m is 100 nm or less:

[Chemical Formula 1]

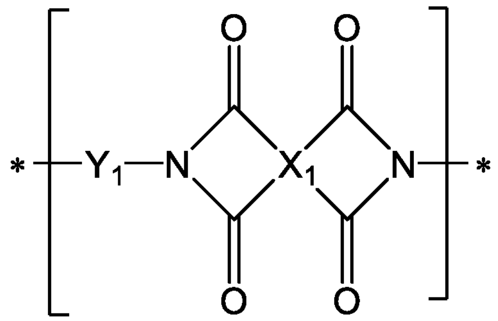

wherein, in Chemical Formula 1,
$X_1$ is an aromatic tetravalent functional group, and
$Y_1$ is an aromatic divalent functional group having 6 to 10 carbon atoms,

[Chemical Formula 2]

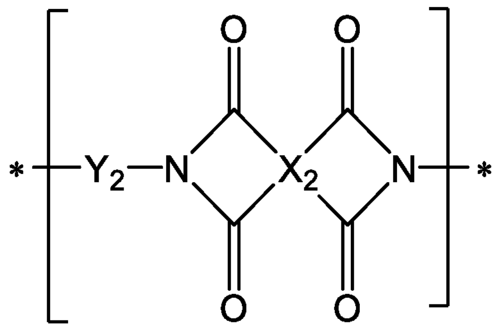

wherein, in Chemical Formula 2,
$X_2$ is an aromatic tetravalent functional group, and
$Y_2$ is an aromatic divalent functional group containing a polycyclic ring.

**2.** The polyimide-based polymer film of claim 1, wherein:
the polyimide-based polymer film has a haze value of 10% or less based on a thickness of 10 $\mu$m.

**3.** The polyimide-based polymer film of claim 1, wherein:
the polyimide-based polymer film has a Bow value of 50 $\mu$m or less based on a thickness of 10 $\mu$m.

**4.** The polyimide-based polymer film of claim 1, wherein:
the polyimide-based polymer film has a Bow value of 25 $\mu$m or less based on a thickness of 5 $\mu$m.

**5.** The polyimide-based polymer film of claim 1, wherein:
the polyimide-based polymer film has a thickness direction retardation $R_{th}$ value of 100 nm or less based on a thickness of 5 $\mu$m.

**6.** The polyimide-based polymer film of claim 1, wherein:
the polyimide-based polymer film has a residual stress with an inorganic material substrate of 52 MPa or less based on a thickness of 5 $\mu$m.

**7.** The polyimide-based polymer film of claim 1, wherein:
the polyimide-based polymer film has a Bow value of less than 12 $\mu$m based on a thickness of 2 $\mu$m.

**8.** The polyimide-based polymer film of claim 1, wherein:
the polyimide-based polymer film has a residual stress with an inorganic material substrate of 50 MPa or less based

on a thickness of 2 $\mu$m.

**9.** The polyimide-based polymer film of claim 1, wherein:
the polyimide-based polymer film has a thickness direction retardation $R_{th}$ value of 40 nm or less based on a thickness of 2 $\mu$m.

**10.** A polyimide-based polymer film comprising a polyimide-based polymer which contains a polyimide repeating unit represented by the following Chemical Formula 1 and a polyimide repeating unit represented by the following Chemical Formula 2,

wherein a Bow value based on a thickness of 5 $\mu$m is 25 $\mu$m or less, and
wherein a thickness direction retardation $R_{th}$ value based on a thickness of 5 $\mu$m is 100 nm or less:

[Chemical Formula 1]

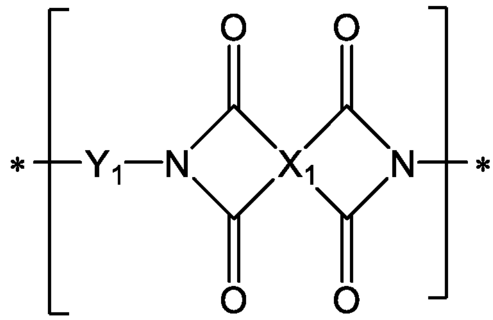

wherein, in Chemical Formula 1,
$X_1$ is an aromatic tetravalent functional group, and
$Y_1$ is an aromatic divalent functional group having 6 to 10 carbon atoms,

[Chemical Formula 2]

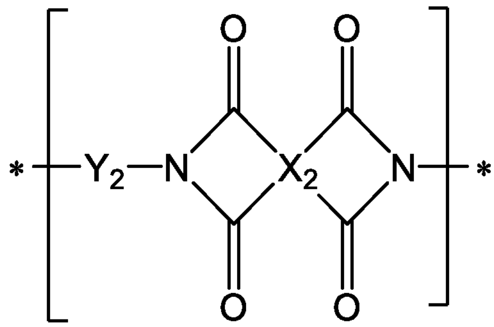

wherein, in Chemical Formula 2,
$X_2$ is an aromatic tetravalent functional group, and
$Y_2$ is an aromatic divalent functional group containing a polycyclic ring.

**11.** The polyimide-based polymer film of claim 10, wherein:
the polyimide-based polymer film has a residual stress with an inorganic material substrate of 52 MPa or less based on a thickness of 5 $\mu$m.

**12.** The polyimide-based polymer film of claim 10, wherein:
the polyimide-based polymer film has a Bow value of less than 12 $\mu$m based on a thickness of 2 $\mu$m.

**13.** The polyimide-based polymer film of claim 10, wherein:
the polyimide-based polymer film has a residual stress with an inorganic material substrate of 50 MPa or less based

on a thickness of 2 $\mu$m.

**14.** The polyimide-based polymer film of claim 10, wherein:
the polyimide-based polymer film has a thickness direction retardation $R_{th}$ value of 40 nm or less based on a thickness of 2 $\mu$m.

**15.** The polyimide-based polymer film of claim 1 or 10, wherein:
the Yi comprises a functional group represented by the following Chemical Formula 3:

[Chemical Formula 3]

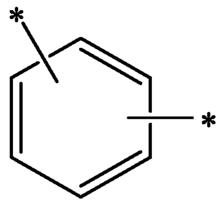

.

**16.** The polyimide-based polymer film of claim 15, wherein:
the functional group represented by Chemical Formula 3 comprises a functional group represented by the following Chemical Formula 3-1:

[Chemical Formula 3-1]

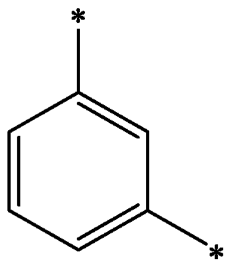

.

**17.** The polyimide-based polymer film of claim 1 or 10, wherein:

the $Y_2$ comprises a divalent functional group represented by the following Chemical Formula 4:

[Chemical Formula 4]

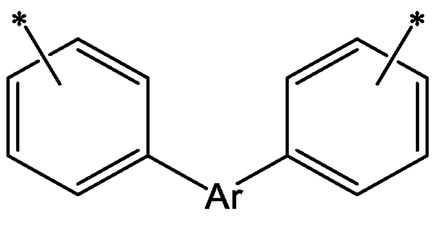

wherein, in Chemical Formula 4, Ar is a polycyclic aromatic divalent functional group.

**18.** The polyimide-based polymer film of claim 17, wherein:
the divalent functional group represented by Chemical Formula 4 comprises a functional group represented by the following Chemical Formula 4-1:

[Chemical Formula 4-1]

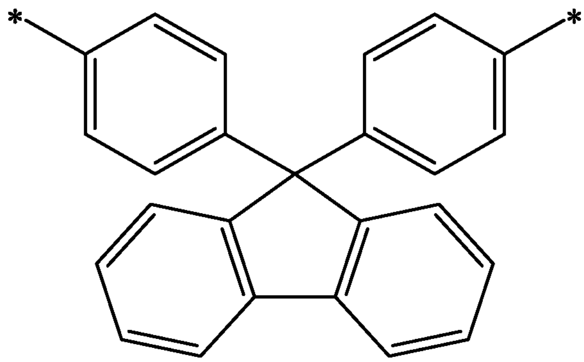

.

**19.** A substrate for display device comprising the polyimide-based polymer film of claim 1 or 10.

**20.** An optical device comprising the polyimide-based polymer film of claim 1 or 10.

【FIG. 1】

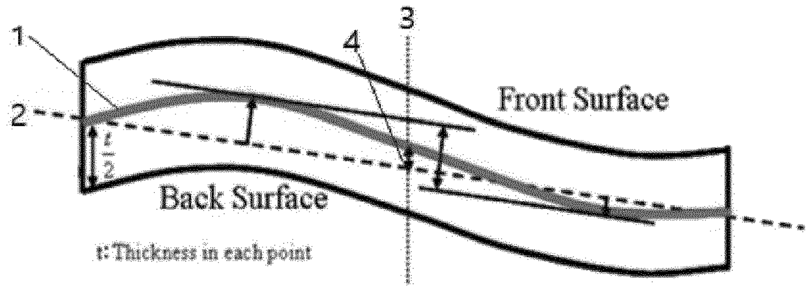

**INTERNATIONAL SEARCH REPORT**

International application No. **PCT/KR2023/003301**

**A. CLASSIFICATION OF SUBJECT MATTER**

**C08J 5/18**(2006.01)i; **C08G 73/10**(2006.01)i

According to International Patent Classification (IPC) or to both national classification and IPC

**B. FIELDS SEARCHED**

Minimum documentation searched (classification system followed by classification symbols)

C08J 5/18(2006.01); C08G 73/10(2006.01); C08L 79/08(2006.01); C09K 19/00(2006.01); G02B 5/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 폴리이미드 필름(polyimide film), 반복단위(repeating unit), 다중고리 방향족(polycyclic aromatic), 디스플레이(display), 기판(substrate), 광학 장치(optical device)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0138758 A (SAMSUNG ELECTRONICS CO., LTD.) 10 December 2015 (2015-12-10)<br>See claims 1, 2, 4, 6 and 20; and paragraphs [0382], [0386] and [0392]. | 1-20 |
| A | KR 10-2022-0012076 A (LG CHEM, LTD.) 03 February 2022 (2022-02-03)<br>See claims 1, 4, 13, 14, 17 and 19; and table 1. | 1-20 |
| A | KR 10-1837947 B1 (SANG-A FRONTEC CO., LTD.) 27 April 2018 (2018-04-27)<br>See claims 1-6 and 16; and tables 1 and 3. | 1-20 |
| A | CN 110099946 A (DOOSAN CORPORATION) 06 August 2019 (2019-08-06)<br>See entire document. | 1-20 |
| A | US 2007-0116899 A1 (TYAN, H.-L. et al.) 24 May 2007 (2007-05-24)<br>See entire document. | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 June 2023** | **09 June 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2023/003301**

| Patent document cited in search report | Publication date (day/month/year) | Patent family member(s) | Publication date (day/month/year) |
|---|---|---|---|
| KR 10-2015-0138758 A | 10 December 2015 | US 2015-0344625 A1 | 03 December 2015 |
| KR 10-2022-0012076 A | 03 February 2022 | None | |
| KR 10-1837947 B1 | 27 April 2018 | None | |
| CN 110099946 A | 06 August 2019 | CN 110099946 B | 21 January 2022 |
| | | KR 10-2018-0071007 A | 27 June 2018 |
| | | WO 2018-117551 A1 | 28 June 2018 |
| US 2007-0116899 A1 | 24 May 2007 | TW 200717097 A | 01 May 2007 |
| | | TW I339758 B | 01 April 2011 |
| | | US 2007-0087134 A1 | 19 April 2007 |
| | | US 7651744 B2 | 26 January 2010 |
| | | US 7662449 B2 | 16 February 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220030175
- KR 1020230031292